# EUROPEAN PATENT APPLICATION

(11) **EP 4 838 641 A2**
(43) Date of publication of application: **11.11.2026**
(21) Application number: 26176854.3
(22) Date of filing: 06.05.2026
(51) Int. Cl.: H01M 50/103, H01M 10/654, H01M 50/15, H01M 50/55, H01M 50/176, H01M 50/528, H01M 50/538, H01M 50/593

(54) **SECONDARY BATTERY AND BATTERY MODULE INCLUDING THE SAME**

(30) Priority: 09.05.2025 KR 20250060531
(71) Applicant: SAMSUNG SDI CO., LTD., Yongin-si, Gyeonggi-do 17084 (KR)
(72) Inventor: KIM, Hyeok Joo, 16678 Suwon-si, Gyeonggi-do (KR); BAE, Kwang Soo, 16678 Suwon-si, Gyeonggi-do (KR); YONG, Jun Sun, 16678 Suwon-si, Gyeonggi-do (KR); KIM, Ji Hwan, 16678 Suwon-si, Gyeonggi-do (KR); ROH, Heyoung Cheoul, 16678 Suwon-si, Gyeonggi-do (KR); KYUNG, Se In, 16678 Suwon-si, Gyeonggi-do (KR); YOON, Ji Hwan, 16678 Suwon-si, Gyeonggi-do (KR); KIM, Se Mi, 16678 Suwon-si, Gyeonggi-do (KR); KIM, Heon Hee, 16678 Suwon-si, Gyeonggi-do (KR); KIM, Duck Hyun, 16678 Suwon-si, Gyeonggi-do (KR); JANG, Woon Suk, 16678 Suwon-si, Gyeonggi-do (KR)
(74) Representative: Bardehle Pagenberg Partnerschaft mbB Patentanwälte Rechtsanwälte

(57) **Abstract**

The present disclosure relates to a secondary battery (2) and a battery module (1) including the same, and is directed to providing a secondary battery (2) including an insulator-current collector assembly (400-402, 500, 600, 601) in which an insulator (403, 503, 603) is coupled to a pair of current collector members, and a battery module (1) including the same. To this end, the present disclosure provides a secondary battery (2) including a case (100), a first terminal (310) and a second terminal (320) that protrude outwardly from the case (100), an electrode assembly (200) disposed inside the case (100) and including a first electrode (210) and a second electrode (220), a first tab member (240) and a second tab member (250) extending from the first electrode (210) and the second electrode (220), respectively, and an insulator-current collector assembly (400-402, 500, 600, 601) disposed inside the case (100) and including a first current collector (420) electrically coupled to the first tab member (240) and the first terminal (310), a second current collector (460) spaced apart from the first current collector (420) and electrically coupled to the second tab member (250) and the second terminal (320), and an insulator (403, 503, 603) including an electrically insulating material and having one side coupled to the first current collector (420) and the other side coupled to the second current collector (460).

## Description

### FIELD

The present disclosure relates to a secondary battery and a battery module including the same.

### BACKGROUND

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode and a negative electrode material, each of which includes an active material capable of intercalating and deintercalating lithium ions and an electrolyte and in which electrical energy is produced through oxidation and reduction reactions when lithium ions are intercalated/deintercalated into/from the positive electrode and the negative electrode.

The aforementioned information disclosed in this background section is merely for enhancement of understanding of the background technology of the present disclosure, and therefore may contain information that does not constitute the related art.

### SUMMARY

The present disclosure is directed to providing a secondary battery including an insulator-current collector assembly in which an insulator is coupled to a pair of current collector members, and a battery module including the same.

However, technical objectives to be achieved by the present disclosure are not limited to the herein-described objectives, and other objectives, which are not described herein, will be clearly understood by those skilled in the art through the following description of the disclosure.

According to aspects of the present disclosure, there is provided a secondary battery including a case, a first terminal and a second terminal that protrude outwardly from the case, an electrode assembly disposed inside the case and including a first electrode and a second electrode, a first tab member and a second tab member extending from the first electrode and the second electrode, respectively, and an insulator-current collector assembly disposed inside the case and including a first current collector electrically coupled to the first tab member and the first terminal, a second current collector spaced apart from the first current collector and electrically coupled to the second tab member and the second terminal, and an insulator including an electrically insulating material and having one side coupled to the first current collector and the other side coupled to the second current collector.

The first current collector may include a first fixing end inserted into and fixed to the insulator, and the second current collector may include a second fixing end inserted into and fixed to the insulator.

An end of the first current collector opposite to the first fixing end in a longitudinal direction, and an end of the second current collector opposite to the second fixing end in the longitudinal direction may each be a free end.

The electrically insulating material may be a thermally conductive synthetic resin.

The electrically insulating material may be a thermally conductive ceramic.

The first current collector may include a first fixing end portion including the first fixing end, the second current collector may include a second fixing end portion including the second fixing end, and each of the first fixing end portion and the second fixing end portion may penetrate into the insulator and come into surface contact with the insulator.

Each of the first fixing end portion and the second fixing end portion may extend along a curved path inside the insulator.

The case may include a vent hole opened to allow a gas to flow between an inside and an outside of the case, and a cell vent coupled to the case to close the vent hole and configured to rupture when an internal pressure of the case is greater than or equal to a reference pressure, and the insulator may include a gas discharge through-hole opened to overlap the vent hole so as not to block the vent hole.

The case may include an electrolyte injection hole opened to inject an electrolyte into the case, and the insulator may include an electrolyte through-hole opened to overlap the electrolyte injection hole and located spaced apart from the gas discharge through-hole so that the electrolyte introduced into the case through the electrolyte injection hole is not blocked by the insulator.

The insulator-current collector assembly may include a first current collector contact portion that comes into contact with an outer peripheral portion of the first current collector so as to suppress shaking of the first current collector, and a second current collector contact portion that comes into contact with an outer peripheral portion of the second current collector so as to suppress shaking of the second current collector, and the first current collector contact portion and the second current collector contact portion may be connected to the insulator.

The first current collector may include a first current collector plate electrically coupled to the first tab member, and a first boss protruding from the first current collector plate toward the first terminal and electrically coupled to the first terminal, and the second current collector may include a second current collector plate electrically coupled to the second tab member, and a second boss protruding from the second current collector plate toward the second terminal and electrically coupled to the second terminal.

The first current collector contact portion may include a pair of first current collector plate longitudinal extensions substantially extending in a longitudinal direction of the first current collector plate so as to be in contact with both side edges of the first current collector plate in a lateral direction, respectively, and the second current collector contact portion may include a pair of second current collector plate longitudinal extensions substantially extending in a longitudinal direction of the second current collector plate so as to be in contact with both side edges of the second current collector plate in a lateral direction, respectively.

The first current collector plate may include a first fixing end inserted into and fixed to the insulator, the second current collector plate may include a second fixing end inserted into and fixed to the insulator, the first current collector contact portion may include a first current collector plate lateral extension substantially extending in the lateral direction of the first current collector plate so as to be in contact with an end of the first current collector plate opposite to the first fixing end in the longitudinal direction, and the second current collector contact portion may include a second current collector plate lateral extension substantially extending in the lateral direction of the second current collector plate so as to be in contact with an end of the second current collector plate opposite to the second fixing end in the longitudinal direction.

Both end portions of the first current collector plate lateral extension may be connected to the pair of first current collector plate longitudinal extensions, respectively, and both end portions of the second current collector plate lateral extension may be connected to the pair of second current collector plate longitudinal extensions, respectively.

According to aspects of the present disclosure, there is provided a battery module including a housing, and a plurality of secondary batteries disposed inside the housing, wherein each of the secondary batteries includes a case, a first terminal and a second terminal that protrude outwardly from the case, an electrode assembly disposed inside the case and including a first electrode and a second electrode, a first tab member and a second tab member extending from the first electrode and the second electrode, respectively, and an insulator-current collector assembly disposed inside the case and including a first current collector electrically coupled to the first tab member and the first terminal, a second current collector spaced apart from the first current collector and electrically coupled to the second tab member and the second terminal, and an insulator including an electrically insulating material and having one side coupled to the first current collector and the other side coupled to the second current collector.

### BRIEF DESCRIPTION OF THE DRAWINGS

The herein and other objects, features and advantages of the present disclosure will become more apparent to those of ordinary skill in the art by describing exemplary embodiments thereof in detail with reference to the accompanying drawings, in which:
FIG. 1 is an exploded perspective view of a battery module according to embodiments of the present disclosure;
FIG. 2 is a perspective view of a secondary battery according to embodiments of the present disclosure;
FIG. 3 is an exploded perspective view of the secondary battery of FIG. 2;
FIG. 4 is a view schematically illustrating a configuration of an electrode assembly of FIG. 3;
FIG. 5 is a cross-sectional view taken along line S1-S1 of FIG. 2;
FIG. 6 is a perspective view of an insulator-current collector assembly according to embodiments of the present disclosure;
FIG. 7 is an enlarged cross-sectional view of portion A of FIG. 5, illustrating one side of an insulator and a fixing end portion inserted into the insulator in the insulator-current collector assembly according to embodiments of the present disclosure;
FIG. 8 is an enlarged cross-sectional view illustrating one side of an insulator and a fixing end portion inserted into the insulator in an insulator-current collector assembly according to embodiments of the present disclosure;
FIG. 9 is an exploded perspective view of an insulator-current collector assembly according to embodiments of the present disclosure;
FIG. 10 is an enlarged view of portion B of FIG. 9;
FIG. 11 is a perspective view of an insulator-current collector assembly according to embodiments of the present disclosure;
FIG. 12 is a perspective view of an insulator-current collector assembly according to embodiments of the present disclosure, viewed from above;
FIG. 13 is a perspective view of the insulator-current collector assembly according to embodiments of the present disclosure, viewed from below;
FIG. 14 is an exploded perspective view of the insulator-current collector assembly according to embodiments of the present disclosure; and
FIG. 15 is an exploded perspective view of an insulator-current collector assembly according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

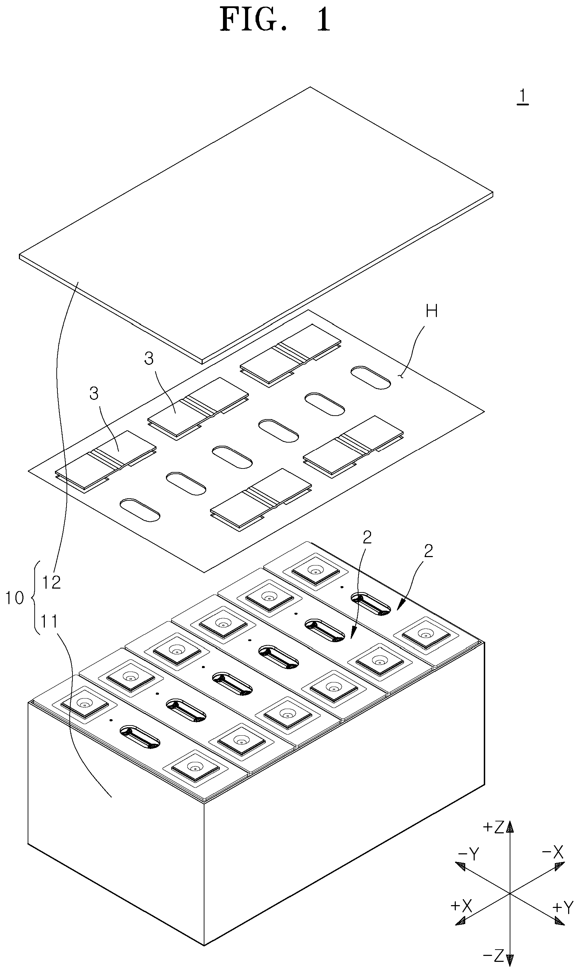

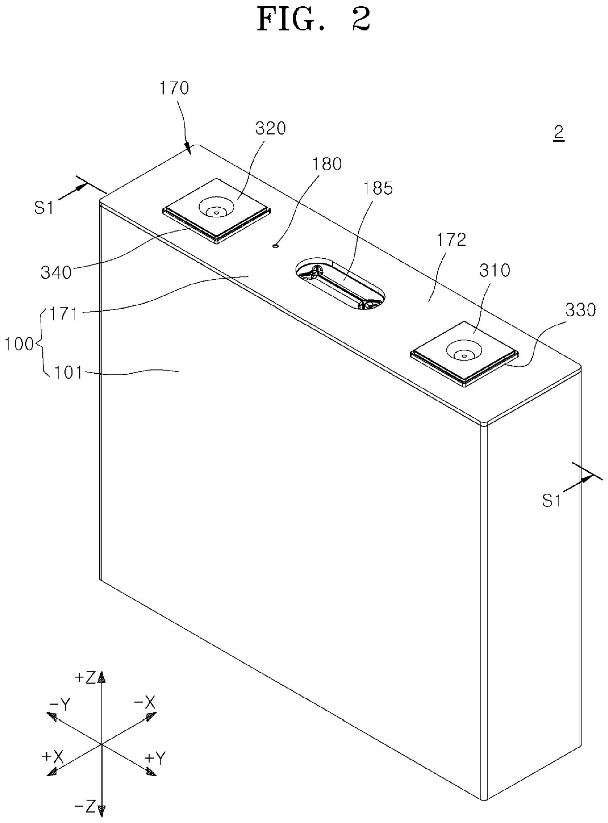

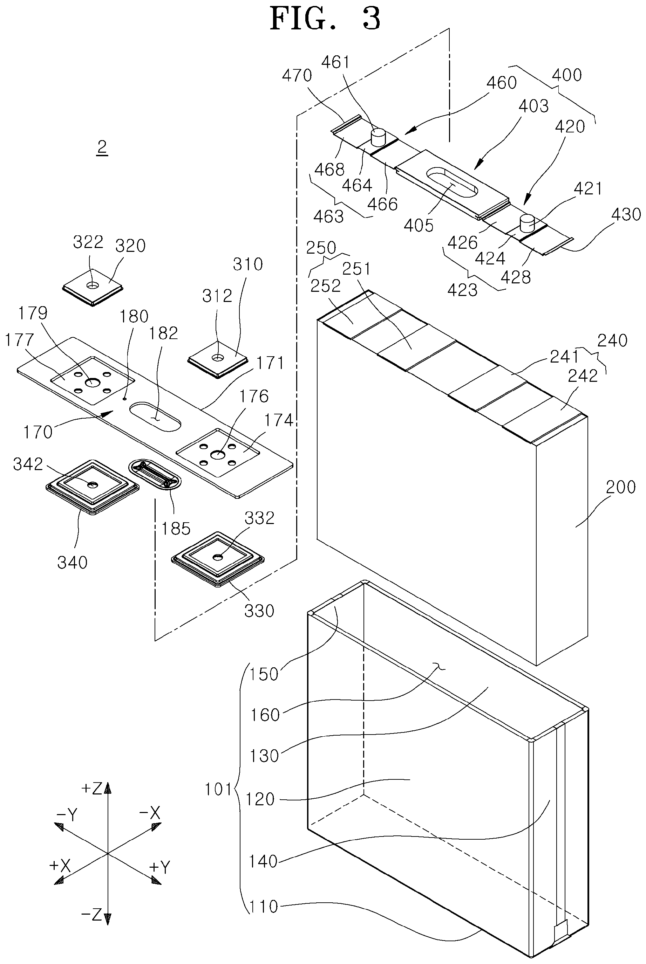

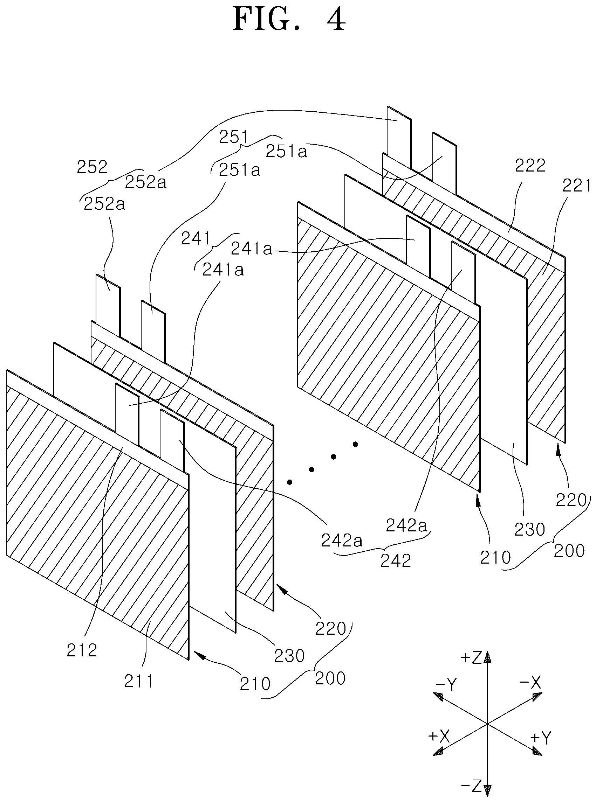

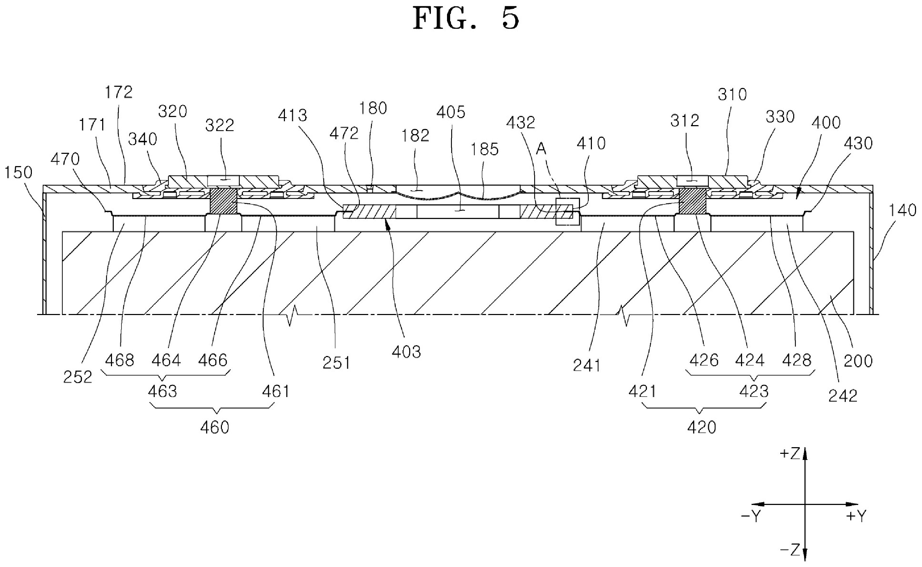

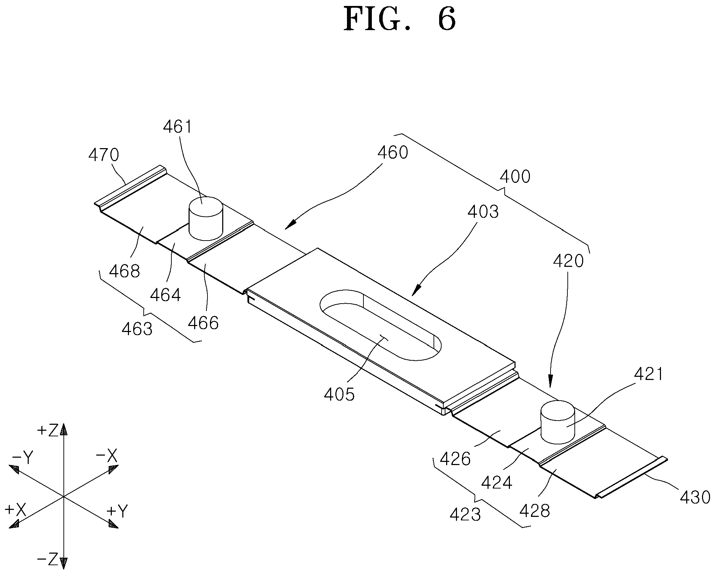

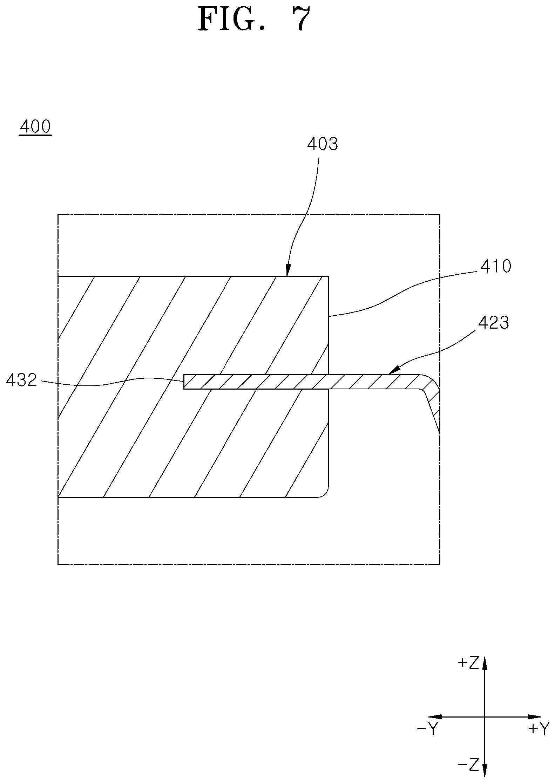

FIG. 1 is an exploded perspective view of a battery module according to embodiments of the present disclosure, FIG. 2 is a perspective view of a secondary battery according to embodiments of the present disclosure, FIG. 3 is an exploded perspective view of the secondary battery of FIG. 2, FIG. 4 is a view schematically illustrating a configuration of an electrode assembly of FIG. 3, FIG. 5 is a cross-sectional view taken along line S1-S1 of FIG. 2, FIG. 6 is a perspective view of an insulator-current collector assembly according to embodiments of the present disclosure, and FIG. 7 is an enlarged cross-sectional view of portion A of FIG. 5, illustrating one side of an insulator and a fixing end portion inserted into the insulator in the insulator-current collector assembly according to embodiments of the present disclosure.

Referring to FIG. 1, a battery module 1 according to the embodiments may include a housing 10, and a secondary battery 2.

The housing 10 forms a schematic exterior of the battery module 1, and may provide a space in which the secondary battery 2 may be accommodated.

The housing 10 according to the embodiments may include a housing body 11 and a cover 12.

The housing body 11 may be formed to have a box shape with an empty interior and one open side. A cross-sectional shape of the housing body 11 is not limited to the quadrangular shape shown in FIG. 1, and may be changed in design to have various shapes such as a polygonal shape, a circular shape, and an oval shape.

The cover 12 may be coupled to the housing body 11 and may close an internal space of the housing body 11. As an example, the cover 12 may be formed to have a substantial plate shape and may be disposed to face the open side of the housing body 11. The cover 12 may be fixed to the housing body 11 by various types of coupling methods such as bolting, welding, fitting, and the like.

The secondary battery 2 may function as a unit structure, which stores and supplies power in the battery module 1. The secondary battery 2 may be disposed inside the housing 10.

A plurality of secondary batteries 2 may be provided. The plurality of secondary batteries 2 may be arranged in two or more rows in at least one direction of a longitudinal direction (an X-axis direction based on FIG. 1) or a lateral direction (a Y-axis direction based on FIG. 1) of the housing 10. In FIG. 1, a case in which the plurality of secondary batteries 2 are arranged in six rows in a longitudinal direction of the housing 10 is illustrated as an example, but the arrangement form of the plurality of secondary batteries 2 is not limited thereto, and the design may be changed. The plurality of secondary batteries 2 may be disposed side by side. The number of secondary batteries 2 may be changed in design depending on the size, shape, or the like of the housing 10.

The plurality of secondary batteries 2 may be electrically connected by a bus bar 3.

The bus bar 3 according to the embodiments may be disposed between the cover 12 and the secondary batteries 2. A plurality of bus bars 3 may be provided. Each of the bus bars 3 may connect a pair of adjacent secondary batteries 2 in series or parallel.

The bus bar 3 may be formed of an electrically conductive material, such as copper, aluminum, or nickel. The specific shape of the bus bar 3 is not limited to that shown in FIG. 1, and the design may be changed to various shapes that can electrically connect the adjacent secondary batteries 2.

The plurality of bus bars 3 may be supported inside the housing 10 by a bus bar holder H.

The bus bar holder H according to the embodiments may be formed to have the shape of a flat plate. The bus bar holder H may be disposed between the cover 12 and the secondary batteries 2. The bus bars 3 may be fixed to the bus bar holder H by various types of coupling methods, such as fitting, bolting, injection, and the like. The bus bar holder H may include a polymer compound material that is electrically insulative.

Hereinafter, the secondary battery 2 according to embodiments of the present disclosure will be described. Hereinafter, a case in which the secondary battery is a lithium-ion secondary battery having a prismatic shape will be described as an example. However, the present disclosure is not limited thereto, and the secondary battery may be a lithium-polymer battery or a cylindrical battery.

Hereinafter, a first direction may be exemplified as a +Z-axis direction based on FIGS. 2 to 6, a second direction may be exemplified as a -Y-axis direction, and a third direction may be exemplified as a -X-axis direction.

Referring to FIGS. 2 to 7, the secondary battery 2 according to the embodiments includes a case 100, a first terminal 310 and a second terminal 320, an electrode assembly 200, a first tab member 240, a second tab member 250, and an insulator-current collector assembly 400.

The case 100 forms a schematic exterior of the secondary battery 2. The electrode assembly 200 is accommodated in the case 100. The case 100 includes a can 101 and a cap plate 171.

An internal space in which the electrode assembly 200 may be accommodated is provided in the can 101. In the embodiments, the can 101 may include a bottom portion 110, a front surface portion 120, a rear surface portion 130, a first side surface portion 140, and a second side surface portion 150.

The bottom portion 110 may form the exterior of a lower side of the can 101 (based on FIG. 3). The bottom portion 110 according to the embodiments may have a rectangular plate shape. The bottom portion 110 may be seated on a bottom surface of the housing body 11.

The front surface portion 120, the rear surface portion 130, the first side surface portion 140, and the second side surface portion 150 may form the exterior of a peripheral surface of the can 101. In the embodiments, the front surface portion 120, the rear surface portion 130, the first side surface portion 140, and the second side surface portion 150 may have the form of plates extending in the first direction from edges of the bottom portion 110.

The front surface portion 120, the rear surface portion 130, the first side surface portion 140, and the second side surface portion 150 may be disposed to surround an upper space of the bottom portion 110. The front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in the third direction. The rear surface portion 130 may be disposed to be spaced a predetermined distance apart from the front surface portion 120 in the third direction. The front surface portion 120 and the rear surface portion 130 may be disposed parallel to each other. The front surface portion 120 and the rear surface portion 130 may have the same area.

The first side surface portion 140 and the second side surface portion 150 may be disposed to face each other in the second direction. The second side surface portion 150 may be disposed to be spaced a predetermined distance apart from the first side surface portion 140 in the second direction. The first side surface portion 140 and the second side surface portion 150 may be disposed parallel to each other. The first side surface portion 140 and the second side surface portion 150 may have the same area. The first side surface portion 140 and the second side surface portion 150 may each have a smaller area than each of the front surface portion 120 and the rear surface portion 130.

The can 101 may further include an opening 160. The opening 160 according to the embodiments may refer to a space enclosed by upper end portions of the front surface portion 120, the rear surface portion 130, the first side surface portion 140, and the second side surface portion 150. The opening 160 interconnects the internal and external spaces of the can 101. Accordingly, the can 101 according to the embodiments may have a rectangular parallelepiped shape with an open upper side.

The cap plate 171 closes the opening 160 and is coupled to the can 101. In the embodiments, the cap plate 171 may be formed to have the shape of a flat plate. The cap plate 171 may be disposed to face the bottom portion 110 of the can 101 in the first direction. That is, the cap plate 171 may be disposed at a position spaced a predetermined distance apart from the bottom portion 110 in the first direction. The cap plate 171 and the bottom portion 110 may be disposed parallel to each other.

The cap plate 171 may be seated on an upper end portion of the can 101, more specifically, on the upper end portions of the front surface portion 120, the rear surface portion 130, the first side surface portion 140, and the second side surface portion 150. The cap plate 171 may be coupled to the can 101 by various types of coupling methods such as welding, bolting, fitting, and the like.

The case 100 may include a vent hole 182 and a cell vent 185. In the embodiments, the vent hole 182 may be formed in the cap plate 171 to have the form of a hole that vertically passes through the cap plate 171 in the first direction. The vent hole 182 provides a path through which gases, flames, smoke, and the like, which are generated inside the can 101 during thermal runaway of the secondary battery 2 due to overcurrent or the like, are discharged to the outside of the can 101. In the embodiments, a planar shape of the vent hole 182 is an elliptical shape, but is not limited thereto and may be changed in design to a circular shape, a polygonal shape, or the like.

The cell vent 185 may be coupled to the cap plate 171 to close the vent hole 182. The cell vent 185 may be opened or closed in association with changes in internal pressure of the can 101. More specifically, the cell vent 185 may rupture when the internal pressure of the can 101 exceeds a reference pressure.

During normal operation of the secondary battery 2, the cell vent 185 may close the vent hole 182 to prevent an electrolyte or the like inside the can 101 from leaking out of the can 101, or to block moisture, foreign substances, or the like from entering the inside of the can 101. Meanwhile, during a thermal runaway of the secondary battery 2, the cell vent 185 may rupture, thereby opening the vent hole 182 and allowing gases, flames, smoke, or the like generated inside the can 101 to be discharged to the outside of the can 101.

In the embodiments, an electrolyte injection hole 180 may be formed in the cap plate 171 by passing through the cap plate 171, and a sealing cap may be installed therein. The electrolyte injection hole 180 may be disposed to be spaced a predetermined distance apart from the vent hole 182 in the Y-axis direction.

The electrode assembly 200 may function as a unit structure for performing a power charging and discharging operation in the secondary battery. The electrode assembly 200 may be accommodated inside the can 101.

The electrode assembly 200 according to the embodiments may include a first electrode 210, a second electrode 220, and a separator 230 disposed between the first electrode 210 and the second electrode 220. The first electrode 210, the separator 230, and the second electrode 220 may each be provided in plurality.

Hereinafter, a case in which the electrode assembly 200 has a stack form in which a plurality of first electrodes 210, a plurality of separators 230, and a plurality of second electrodes 220 are stacked sequentially in the third direction will be described as an example. However, the electrode assembly 200 is not limited to the form described herein, and may also be formed in such a way that the first electrodes 210, the separators 230, and the second electrodes 220 are stacked and then wound around a winding axis in a clockwise or counterclockwise direction.

The first electrode 210 may function as one of a positive electrode and a negative electrode of the electrode assembly 200. Hereinafter, a case in which the first electrode 210 is the positive electrode of the electrode assembly 200 will be described as an example. However, the first electrode 210 is not limited to thereto, and may also function as the negative electrode of the electrode assembly 200.

The first electrode 210 according to the embodiments may be formed in the form of a foil including a metal material such as aluminum or an aluminum alloy. The type, size, and shape of the first electrode 210 are not particularly limited as long as the first electrode 210 has conductivity and does not cause chemical changes in the secondary battery. A planar shape of the first electrode 210 may be changed in design to various shapes other than the rectangular shape shown in FIG. 4.

The plurality of first electrodes 210 may be provided. The plurality of first electrodes 210 may be arranged between the front surface portion 120 and the rear surface portion 130 of the can 101 in the third direction. The number of first electrodes 210 may be changed in design according to the charging capacity or the like of the secondary battery 2.

A first active material layer 211 may be applied to at least a portion of the first electrode 210. The first active material layer 211 may be applied to both surfaces of the first electrode 210, or alternatively, may be applied to only one surface of the first electrode 210.

In the embodiments, since the first electrode 210 functions as the positive electrode, the first active material layer 211 may include a positive electrode active material.

The positive electrode active material may include a compound (lithiated intercalation compound) capable of reversibly intercalating and deintercalating lithium. More specifically, the positive electrode active material may include one or more types of composite oxides of lithium and a metal selected from cobalt, manganese, nickel, iron, and a combination thereof.

As an example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM), or may include two or all of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any electrically conductive material that does not cause a chemical change in the battery may be used. Examples of the positive electrode conductive material may include a carbon-based material such as natural graphite, artificial graphite, carbon black, acetylene black, ketjen black, carbon fiber, carbon nanofiber, carbon nanotubes, and the like, a metal-based material in the form of a metal powder or metal fiber including copper, nickel, aluminum, silver, and the like, a conductive polymer such as a polyphenylene derivative, or a mixture thereof.

The first active material layer 211 may further include a positive electrode binder.

The positive electrode binder serves to adhere particles constituting the positive electrode active material to each other well, and to adhere the positive electrode active material to the first electrode 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 to which the first active material layer 211 is not applied. The first uncoated portion 212 according to the embodiments may be disposed in an upper end region of the first electrode 210, which is disposed to face the opening 160 from the inside of the can 101. However, the first uncoated portion 212 is not limited to such a form, and may be formed across the entire edge region of the first electrode 210.

The second electrode 220 can function as the other one of the positive electrode and the negative electrode of the electrode assembly 200. Hereinafter, a case in which the second electrode 220 is the negative electrode of the electrode assembly 200 will be described as an example. However, the second electrode 220 is not limited thereto, and may also function as the positive electrode of the electrode assembly 200.

The plurality of second electrodes 220 may be provided. The plurality of second electrodes 220 may be arranged in the third direction between the front surface portion 120 and the rear surface portion 130 of the can 101. The first electrode 210 and the second electrode 220 may be alternately disposed in the third direction. The second electrode 220 may be spaced a predetermined distance apart from the first electrode 210 in the third direction.

The second electrode 220 according to the embodiments may be formed in the form of a foil including a metal material such as copper, a copper alloy, nickel, or a nickel alloy. The type, size, and shape of the second electrode 220 are not particularly limited as long as the second electrode 220 has conductivity and does not cause chemical changes in the secondary battery. A planar shape of the first electrode 210 may be changed in design to various shapes other than the rectangular shape shown in FIG. 4.

A second active material layer 221 may be applied to at least a portion of the second electrode 220. The second active material layer 221 may be applied to both surfaces of the second electrode 220, or alternatively, may be applied to only one surface of the second electrode 220.

As the second electrode 220 functions as the negative electrode, the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate-shaped, flaky, spherical, or fibrous natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to embodiments, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material is used to impart conductivity to the second active material layer 221, and any electrically conductive material that does not cause a chemical change in the battery may be used. Examples of the negative electrode conductive material may include a carbon-based material such as natural graphite, artificial graphite, carbon black, acetylene black, Ketjen black, carbon fibers, carbon nanofibers, carbon nanotubes, and the like, a metal-based material in the form of a metal powder or metal fibers including copper, nickel, aluminum, silver, and the like, a conductive polymer such as a polyphenylene derivative, or a mixture thereof.

The negative electrode binder serves to adhere particles constituting the negative electrode active material to each other well, and to adhere the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 to which the second active material layer 221 is not applied. The second uncoated portion 222 according to the embodiments may be disposed in an upper end region of the second electrode 220 disposed to face the opening 160 from the inside of the can 101. However, the second uncoated portion 222 is not limited to such a form, and may be formed across the entire edge region of the second electrode 220.

The separator 230 may be disposed between the first electrode 210 and the second electrode 220. The separator 230 may function to prevent short-circuiting of the first electrode 210 and the second electrode 220 while allowing the movement of lithium ions between the first electrode 210 and the second electrode 220.

The separator 230 may be disposed to cover the entire surface region of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in a form in which a coating layer including organic materials and a coating layer including inorganic materials are stacked.

The first tab member 240 is connected to the first electrode 210, and may protrude outward from the electrode assembly 200. As the first electrode 210 is exemplified as the positive electrode, the first tab member 240 may function as a positive electrode tab of the secondary battery 2. However, the first tab member 240 is not limited thereto, and may function as a negative electrode tab of the secondary battery 2 when the first electrode 210 is the negative electrode.

In the embodiments, a distance from the first side surface portion 140 to the first tab member 240 may be smaller than a distance from the second side surface portion 150 to the first tab member 240. That is, the first tab member 240 may be disposed inside the can 101 at a position closer to the first side surface portion 140 than to the second side surface portion 150.

The first tab member 240 according to the embodiments may include a first inner tab member 241 and a first outer tab member 242.

The first inner tab member 241 and the first outer tab member 242 may extend from the first electrode 210 in the first direction. As an example, the first inner tab member 241 and the first outer tab member 242 may extend from the inside of the can 101 toward the cap plate 171.

The first inner tab member 241 and the first outer tab member 242 may be spaced apart from each other in the second direction. A distance from the first side surface portion 140 to the first outer tab member 242 may be smaller than a distance from the first side surface portion 140 to the first inner tab member 241.

In the embodiments, the first inner tab member 241 may include a plurality of first inner tabs 241a. In the embodiments, each of the first inner tabs 241a may have the form of a foil extending in the first direction from the first uncoated portion 212 of the first electrode 210. The first inner tab 241a may have a substantially rectangular shape. However, the shape of the first inner tab 241a is not limited thereto, and may be changed in design.

The first inner tab 241a may be integrally formed with the first electrode 210. For example, the first inner tab 241a may be a remaining region of the first uncoated portion 212 after a partial region of the first uncoated portion 212 has been cut or removed through processes such as notching. Alternatively, the first inner tab 241a may be fabricated separately from the first electrode 210 and then connected to the first uncoated portion 212 by welding or the like. The material of the first inner tab 241a may be the same as the material of the first electrode 210.

The number of first inner tabs 241a may be the same as the number of first electrodes 210. The first inner tabs 241a may individually extend from the first uncoated portions 212 of the different first electrodes 210, respectively. The plurality of first inner tabs 241a may be stacked in the third direction. The plurality of first inner tabs 241a may be disposed parallel to each other. Accordingly, the first inner tab member 241 according to the embodiments may be an assembly of the plurality of first inner tabs 241a stacked in the third direction. The adjacent first inner tabs 241a may be in contact with each other and may be spaced apart from each other by a thickness of the separator 230.

In the embodiments, the first outer tab member 242 may include a plurality of first outer tabs 242a. In the embodiments, the first outer tab 242a may have the form of a foil extending in the first direction from the first uncoated portion 212 of the first electrode 210. The first outer tab 242a may have a substantially rectangular shape. However, the shape of the first outer tab 242a is not limited thereto, and may be changed in design. The shape and area of the first outer tab 242a may be the same as those of the first inner tab 241a, but may also be configured differently from the first inner tab 241a.

The first outer tab 242a and the first inner tab 241a may be spaced apart from each other in the second direction. As an example, the first outer tab 242a and the first inner tab 241a may be sequentially disposed in the second direction on the first uncoated portion 212.

The first outer tab 242a may be integrally formed with the first electrode 210. For example, the first outer tab 242a may be a remaining region of the first uncoated portion 212 after a partial region of the first uncoated portion 212 has been cut or removed through processes such as notching. Alternatively, the first outer tab 242a may be fabricated separately from the first electrode 210 and then connected to the first uncoated portion 212 by welding or the like. The material of the first outer tab 242a may be the same as the material of the first electrode 210.

The number of the first outer tabs 242a may be the same as the number of the first electrodes 210. The first outer tabs 242a may individually extend from the first uncoated portions 212 of the different first electrodes 210, respectively. The plurality of first outer tabs 242a may be stacked in the third direction. The plurality of first outer tab 242a may be disposed parallel to each other. Accordingly, the first outer tab member 242 according to the embodiments may be an assembly of the plurality of first outer tabs 242a stacked in the third direction. The adjacent first outer tabs 242a may be in contact with each other and may be spaced apart from each other by the thickness of the separator 230.

The first terminal 310 may function as a component that provides electrical connection between the first electrode 210 of the secondary battery 2 and the bus bar 3 or an external power device. In the embodiments, the first terminal 310 may be formed of an electrically conductive material such as aluminum, nickel, or copper. For example, the first terminal 310 may function as a positive terminal of the secondary battery 2.

The first terminal 310 may overlap the cap plate 171 and may protrude outward from the cap plate 171. The first terminal 310 may be disposed on a first terminal mounting surface 174, which is formed in a stepped manner on an outer side surface 172 of the cap plate 171 facing an external space of the case 100.

The first terminal 310 includes a first welding groove 312 recessed in the -Z-axis direction. A first boss through-hole 176 passing through the cap plate 171 may be formed in the first terminal mounting surface 174 to be aligned with the first welding groove 312 in the first direction.

The bus bar 3 may be seated on an upper surface of the first terminal 310. The bus bar 3 and the first terminal 310 may be integrally joined by laser welding or the like.

The second tab member 250 is connected to the second electrode 220, and may protrude outward from the electrode assembly 200. As the second electrode 220 is exemplified as the negative electrode, the second tab member 250 may function as a negative electrode tab of the secondary battery 2. However, the second tab member 250 is not limited thereto, and may function as a positive electrode tab of the secondary battery 2 when the second electrode 220 is the positive electrode.

In the embodiments, a distance from the second side surface portion 150 to the second tab member 250 may be smaller than a distance from the first side surface portion 140 to the second tab member 250. That is, the second tab member 250 may be disposed inside the can 101 at a position relatively closer to the second side surface portion 150 than to the first side surface portion 140.

The second tab member 250 according to the embodiments may include a second inner tab member 251 and a second outer tab member 252.

The second inner tab member 251 and the second outer tab member 252 may extend in the first direction from the second electrode 220. As an example, the second inner tab member 251 and the second outer tab member 252 may extend from the inside of the can 101 toward the cap plate 171.

The second inner tab member 251 and the second outer tab member 252 may be spaced apart from each other in the second direction. A distance from the second side surface portion 150 to the second outer tab member 252 may be smaller than a distance from the second side surface portion 150 to the second inner tab member 251.

In the embodiments, the second inner tab member 251 may include a plurality of second inner tabs 251a. The second inner tab 251a according to the embodiments may have the form of a foil extending in the first direction from the second uncoated portion 222 of the second electrode 220. The second inner tab 251a may have a substantially rectangular shape. However, the shape of the second inner tab 251a is not limited thereto, and may be changed in design.

The second inner tab 251a may be integrally formed with the second electrode 220. For example, the second inner tab 251a may be a remaining region of the second uncoated portion 222 after a partial region of the second uncoated portion 222 has been cut or removed through processes such as notching. Alternatively, the second inner tab 251a may be fabricated separately from the second electrode 220 and then connected to the second uncoated portion 222 by welding or the like. The material of the second inner tab 251a may be the same as the material of the second electrode 220.

The number of the second inner tabs 251a may be the same as the number of the second electrodes 220. The second inner tabs 251a may individually extend from the second uncoated portions 222 of the different second electrodes 220, respectively. The plurality of second inner tabs 251a may be stacked in the third direction. The plurality of second inner tabs 251a may be disposed parallel to each other. Accordingly, the second inner tab member 251 according to the embodiments may be an assembly of the plurality of second inner tabs 251a stacked in the third direction. The adjacent second inner tabs 251a may be in contact with each other and may be spaced apart from each other by the thickness of the separator 230.

In the embodiments, the second outer tab member 252 may include a plurality of second outer tabs 252a. In the embodiments, the second outer tab 252a may have the form of a foil extending in the first direction from the second uncoated portion 222 of the second electrode 220. The second outer tab 252a may have a substantially rectangular shape. However, the shape of the second outer tab 252a is not limited thereto, and may be changed in design. The shape and area of the second outer tab 252a may be the same as those of the second inner tab 251a, but may also be configured differently from the second inner tab 251a.

The second outer tab 252a and the second inner tab 251a may be spaced apart from each other in the second direction. As an example, the second outer tab 252a and the second inner tab 251a may be sequentially disposed on the second uncoated portion 222 in the second direction.

The second outer tab 252a may be integrally formed with the second electrode 220. For example, the second outer tab 252a may be a remaining region of the second uncoated portion 222 after a partial region of the second uncoated portion 222 has been cut or removed through processes such as notching. Alternatively, the second outer tab 252a may be fabricated separately from the second electrode 220 and then connected to the second uncoated portion 222 by welding or the like. The material of the second outer tab 252a may be the same as the material of the second electrode 220.

The number of the second outer tabs 252a may be the same as the number of the second electrodes 220. The second outer tabs 252a may individually extend from the second uncoated portions 222 of the different second electrodes 220, respectively. The plurality of second outer tabs 252a may be stacked in the third direction. The plurality of second outer tabs 252a may be disposed parallel to each other. Accordingly, the second outer tab member 252 according to the embodiments may be an assembly of the plurality of second outer tabs 252a stacked in the third direction. The adjacent second outer tabs 252a may be in contact with each other and may be spaced apart from each other by the thickness of the separator 230.

The second terminal 320 may function as a component that provides electrical connection between the second electrode 220 of the secondary battery 2 and the bus bar 3 or an external power device. In the embodiments, the second terminal 320 may be formed of an electrically conductive material such as aluminum, nickel, or copper. For example, the second terminal 320 may function as a negative electrode terminal of the secondary battery 2.

The second terminal 320 may overlap the cap plate 171 and may protrude outward from the cap plate 171. The second terminal 320 may be disposed on a second terminal mounting surface 177, which is formed in a stepped manner on the outer side surface 172 of the cap plate 171 facing the external space of the case 100.

The second terminal 320 includes a second welding groove 322 recessed in the -Z-axis direction. A second boss through-hole 179 passing through the cap plate 171 may be formed in the second terminal mounting surface 177 to be aligned with the second welding groove 322 in the first direction.

The bus bar 3 may be seated on an upper surface of the second terminal 320. The bus bar 3 and the second terminal 320 may be integrally joined by laser welding or the like.

The secondary battery 2 according to the embodiments may further include a first gasket 330 and a second gasket 340.

The first gasket 330 is coupled to the first terminal 310 and the cap plate 171 so that a space between the first terminal 310 and the cap plate 171 is sealed. The first gasket 330 electrically insulates the cap plate 171 and the first terminal 310 from each other.

The second gasket 340 is coupled to the second terminal 320 and the cap plate 171 so that a space between the second terminal 320 and the cap plate 171 is sealed. The second gasket 340 electrically insulates the cap plate 171 and the second terminal 320 from each other.

The first gasket 330 and the second gasket 340 may each be formed of an insulating material such as polyethylene (PE), polypropylene (PP), polyethylene terephthalate (PET), rubber, or the like.

The first gasket 330 may include a first gasket hollow 332 through which a first boss 421 of a first current collector 420 passes and is joined to the first terminal 310 via the first boss through-hole 176. The first gasket hollow 332, the first boss through-hole 176, and the first welding groove 312 are arranged in a line in the first direction.

The second gasket 340 may be include a second gasket hollow 342 through which a second boss 461 of a second current collector 460 passes and is joined to the second terminal 320 via the second boss through-hole 179. The second gasket hollow 342, the second boss through-hole 179, and the second welding groove 322 are arranged in a line in the first direction.

The first terminal 310, the second terminal 320, the first gasket 330, the second gasket 340, and the cell vent 185 are coupled to the cap plate 171 to form a cap plate assembly 170 before the cap plate 171 is coupled to the can 101 so as to close the opening 160 of the can 101. In other words, the cap plate assembly 170, which includes the cap plate 171, the first terminal 310, the second terminal 320, the first gasket 330, the second gasket 340, and the cell vent 185, is coupled to the can 101 so as to close the opening 160 of the can 101.

The insulator-current collector assembly 400 is located inside the case 100 and includes the first current collector 420, the second current collector 460, and an insulator 403. Inside the case 100, the insulator-current collector assembly 400 may be located between the electrode assembly 200 and the cap plate 171.

The first current collector 420 is electrically coupled to the first tab member 240 and the first terminal 310. The second current collector 460 is electrically coupled to the second tab member 250 and the second terminal 320. For example, the first current collector 420 and the second current collector 460 may each be formed of an electrically conductive material such as copper, aluminum, or nickel.

The first current collector 420 may include a first current collector plate 423 and the first boss 421. The first current collector plate 423 is electrically coupled to the first tab member 240. The first boss 421 protrudes from the first current collector plate 423 toward the first terminal 310 and is electrically coupled to the first terminal 310.

The first current collector plate 423 may include a first central plate 424, a first inner plate 426, and a first outer plate 428.

The first central plate 424 may have a flat plate shape perpendicular to the first direction. The first boss 421 may protrude from the first central plate 424 in the first direction. The first boss 421 may pass through the first gasket hollow 332 and the first boss through-hole 176 and may be joined to the first terminal 310, for example, by a method such as laser welding.

The first inner plate 426 is connected to the first central plate 424 and may be in contact with the first inner tab member 241. In the embodiments, the first inner plate 426 may be connected in a stepped manner to one end of the first central plate 424 in the -Y-axis direction.

The first inner plate 426 and the first inner tab member 241 may be disposed to face each other in the first direction. One surface of the first inner plate 426 facing the first inner tab member 241 may be in contact with the first inner tab member 241. The first inner tab member 241 and the first inner plate 426 may be joined, for example, by a method such as laser welding.

The first outer plate 428 is connected to the first central plate 424 and may be in contact with the first outer tab member 242. In the embodiments, the first outer plate 428 may be connected in a stepped manner to the other end of the first central plate 424 in the +Y-axis direction. The first inner plate 426 and the first outer plate 428 may extend in opposite directions from the first central plate 424.

The first outer plate 428 and the first outer tab member 242 may be disposed to face each other in the first direction. One surface of the first outer plate 428 facing the first outer tab member 242 may be in contact with the first outer tab member 242. The first outer tab member 242 and the first outer plate 428 may be joined, for example, by a method such as laser welding.

The second current collector 460 may include a second current collector plate 463 and the second boss 461. The second current collector plate 463 is electrically coupled to the second tab member 250. The second boss 461 protrudes from the second current collector plate 463 toward the second terminal 320 and is electrically coupled to the second terminal 320.

The second current collector plate 463 may include a second central plate 464, a second inner plate 466, and a second outer plate 468.

The second central plate 464 may have a flat plate shape perpendicular to the first direction. The second boss 461 may protrude from the second central plate 464 in the first direction. The second boss 461 may pass through the second gasket hollow 342 and the second boss through-hole 179 and may be joined to the second terminal 320, for example, by a method such as laser welding.

The second inner plate 466 is connected to the second central plate 464 and may be in contact with the second inner tab member 251. In the embodiments, the second inner plate 466 may be connected in a stepped manner to one end of the second central plate 464 in the +Y-axis direction.

The second inner plate 466 and the second inner tab member 251 may be disposed to face each other in the first direction. One surface of the second inner plate 466 facing the second inner tab member 251 may be in contact with the second inner tab member 251. The second inner tab member 251 and the second inner plate 466 may be joined, for example, by a method such as laser welding.

The second outer plate 468 is connected to the second central plate 464 and may be in contact with the second outer tab member 252. In the embodiments, the second outer plate 468 may be connected in a stepped manner to the other end of the second central plate 464 in the Y-axis direction. The second inner plate 466 and the second outer plate 468 may extend in opposite directions from the second central plate 464.

The second outer plate 468 and the second outer tab member 252 may be disposed to face each other in the first direction. One surface of the second outer plate 468 facing the second outer tab member 252 may be in contact with the second outer tab member 252. The second outer tab member 252 and the second outer plate 468 may be joined, for example, by a method such as laser welding.

The insulator 403 has one side coupled to the first current collector 420 and the other side coupled to the second current collector 460. The insulator 403 may be located between the first current collector 420 and the second current collector 460, which are spaced apart from each other in the Y-axis direction.

The insulator 403 includes an electrically insulating material. The insulator 403 may be formed of an electrically insulating material. According to embodiments of the present disclosure, the electrically insulating material may be a thermally conductive synthetic resin. The thermally conductive synthetic resin may include, for example, at least one of polycarbonate (PC), polyphenylene sulfide (PPS), polyethylene (PE), polyphthalamide (PPA), and polyamide (PA).

According to embodiments of the present disclosure, the electrically insulating material may be a thermally conductive ceramic. The thermally conductive ceramic may include, for example, at least one of alumina, aluminum nitride, and boron nitride.

The insulator 403 includes a gas discharge through-hole 405 that is open so as to overlap the vent hole 182. The gas discharge through-hole 405 may be formed in the insulator 403 so as to pass through the insulator 403 in the first direction. The vent hole 182 and the gas discharge through-hole 405 may be arranged along a straight line parallel to the first direction.

Accordingly, when the internal pressure of the case 100 exceeds the reference pressure and the cell vent 185 ruptures, gases, flames, smoke, and the like may be smoothly discharged to the outside of the case 100 through the gas discharge through-hole 405 and the vent hole 182 without being blocked by the insulator 403.

The first current collector 420 includes a first fixing end 432 inserted into and fixed to the insulator 403. For example, the first fixing end 432 may be an end of the first inner plate 426, which is relatively farther from the first central plate 424, among a pair of ends of the first inner plate 426 in the Y-axis direction.

The second current collector 460 includes a second fixing end 472 inserted into and fixed to the insulator 403. For example, the second fixing end 472 may be an end of the second inner plate 466, which is relatively farther from the second central plate 464, among a pair of ends of the second inner plate 466 in the Y-axis direction.

In a longitudinal direction of the first current collector 420, that is, in the Y-axis direction, an end 430 opposite to the first fixing end 432 may be a free end that is not coupled to or supported by another member. In a longitudinal direction of the second current collector 460, that is, in the Y-axis direction, an end 470 opposite to the second fixing end 472 may be a free end that is not coupled to or supported by another member.

The first current collector plate 423 of the first current collector 420 includes a first fixing end portion including the first fixing end 432. The first fixing end portion may penetrate into the insulator 403 through one side surface 410 of the insulator 403 and come into surface contact with the insulator 403. The first fixing end portion may extend in a straight line direction parallel to a Y-axis.

The second current collector plate 463 of the second current collector 460 includes a second fixing end portion including the second fixing end 472. The second fixing end portion may penetrate into the insulator 403 through the other side surface 413 of the insulator 403 and come into surface contact with the insulator 403. The second fixing end portion may extend in the straight line direction parallel to the Y-axis.

The insulator-current collector assembly 400 may be manufactured by a so-called insert molding method in which the first current collector 420 and the second current collector 460 are inserted and fixed inside a mold, and a molten synthetic resin is injected into the mold and cured.

In an insulator-current collector assembly 400 according to embodiments of the present disclosure, a pair of current collectors 420 and 460 are coupled via an insulator 403. Accordingly, in a case 100, the degree of freedom of movement of the pair of current collectors 420 and 460 may be reduced, thereby lowering a defect rate of a secondary battery 2 and improving the performance of the secondary battery 2 and a battery module 1 including the same.

According to the insulator-current collector assembly 400, since fixing end portions of the pair of current collectors 420 and 460 are connected to the insulator 403 having excellent thermal conductivity, heat dissipation of the current collectors 420 and 460 during a manufacturing process of the secondary battery 2 and during charging and discharging of the secondary battery 2 may be facilitated. Accordingly, thermal deformation of the current collectors 420 and 460, and resulting overheating and thermal runaway of the secondary battery 2, can be suppressed.

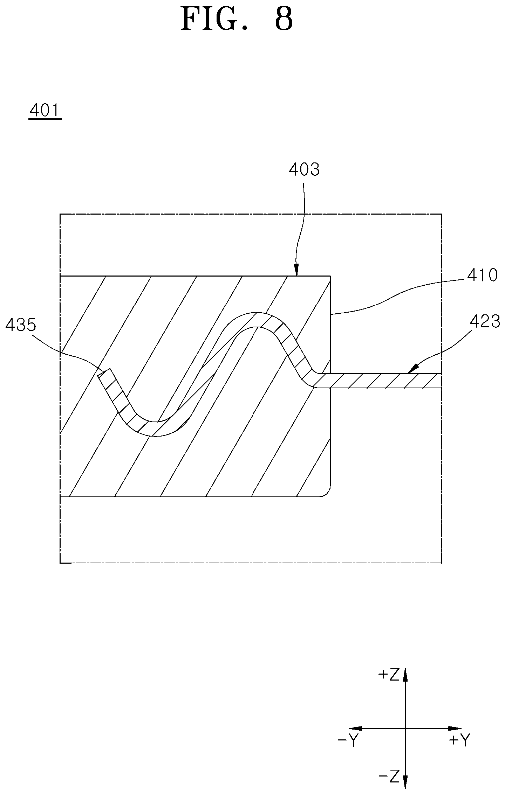

FIG. 8 is an enlarged cross-sectional view illustrating one side of an insulator and a fixing end portion inserted into the insulator in an insulator-current collector assembly according to embodiments of the present disclosure.

Referring to FIGS. 3, 5, and 8, an insulator-current collector assembly 401 according to embodiments of the present disclosure may be included in a secondary battery 2 in place of the insulator-current collector assembly 400 according to embodiments of the present disclosure. Similar to the insulator-current collector assembly 400 according to embodiments of the present disclosure, the insulator-current collector assembly 401 according to embodiments of the present disclosure includes a first current collector 420, a second current collector 460, and an insulator 403.

In the insulator-current collector assembly 401 according to embodiments of the present disclosure, except for a first fixing end portion of the first current collector 420 and a second fixing end portion of the second current collector 460, other configurations are the same as those of the insulator-current collector assembly 400 according to embodiments of the present disclosure, and thus redundant descriptions thereof will be omitted.

The first current collector 420 of the insulator-current collector assembly 401 according to embodiments of the present disclosure includes a first fixing end 435 inserted into and fixed to the insulator 403. For example, the first fixing end 435 may be an end of a first inner plate 426, which is relatively farther from a first central plate 424, among a pair of ends of the first inner plate 426 in the Y-axis direction.

A first current collector plate 423 included in the first current collector 420 includes the first fixing end portion including the first fixing end 435. The first fixing end portion may penetrate into the insulator 403 through one side surface 410 of the insulator 403 and come into surface contact with the insulator 403. The first fixing end portion extends along a curved path inside the insulator 403. For example, as illustrated in FIG. 8, the first fixing end portion may extend in a zigzag path.

The first fixing end portion of the first current collector plate 423 illustrated in FIG. 8 is in surface contact with the insulator 403 over a larger area inside the insulator 403 than the first fixing end portion of the first current collector plate 423 illustrated in FIG. 7. Accordingly, a heat dissipation effect of the insulator-current collector assembly 401 according to embodiments of the present disclosure may be further improved compared to the heat dissipation effect of the insulator-current collector assembly 400 according to embodiments.

The second current collector 460 of the insulator-current collector assembly 401 according to embodiments of the present disclosure includes a second fixing end inserted into and fixed to the insulator 403. For example, the second fixing end may be an end of a second inner plate 466, which is relatively farther from a second central plate 464, among a pair of ends of the second inner plate 466 in the Y-axis direction.

A second current collector plate 463 included in the second current collector 460 includes the second fixing end portion including the second fixing end. The second fixing end portion may penetrate into the insulator 403 through the other side surface 413 of the insulator 403 and come into surface contact with the insulator 403. The second fixing end portion extends along a curved path inside the insulator 403.

The second fixing end and the second fixing end portion of the insulator-current collector assembly 401 according to embodiments of the present disclosure have a shape that is symmetrical, left and right, to the first fixing end 435 and the first fixing end portion illustrated in FIG. 8, and perform the same functions as the first fixing end 435 and the first fixing end portion, and thus, redundant descriptions thereof will be omitted.

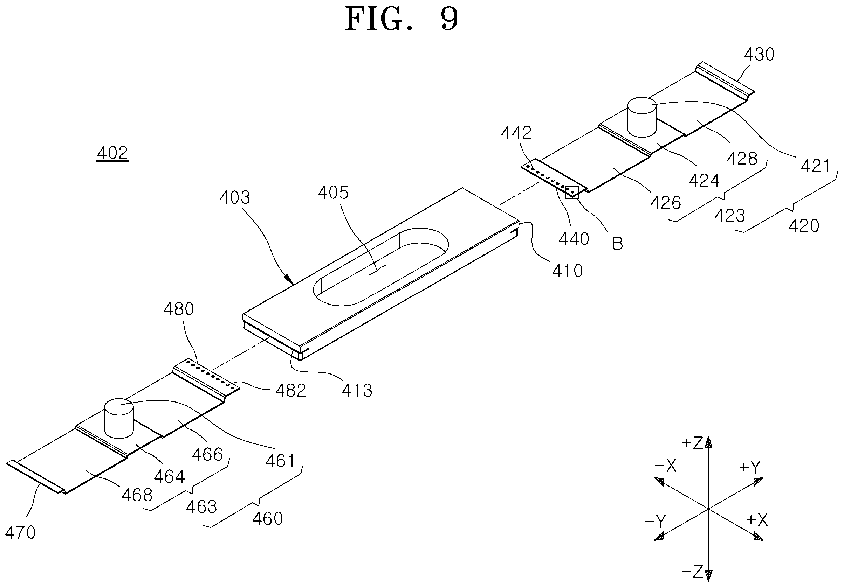

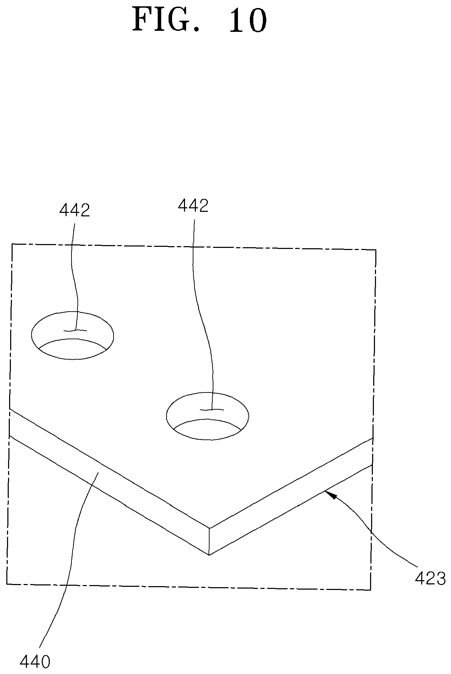

FIG. 9 is an exploded perspective view of an insulator-current collector assembly according to embodiments of the present disclosure, and FIG. 10 is an enlarged view of portion B of FIG. 9.

Referring to FIGS. 3, 5, 9, and 10, an insulator-current collector assembly 402 according to embodiments of the present disclosure may be included in a secondary battery 2 in place of the insulator-current collector assembly 400 according to embodiments of the present disclosure. Similar to the insulator-current collector assembly 400 according to embodiments of the present disclosure, the insulator-current collector assembly 402 according to embodiments of the present disclosure includes a first current collector 420, a second current collector 460, and an insulator 403.

In the insulator-current collector assembly 402 according to embodiments of the present disclosure, except for a first fixing end portion of the first current collector 420 and a second fixing end portion of the second current collector 460, other configurations are the same as those of the insulator-current collector assembly 400 according to embodiments of the present disclosure, and thus redundant descriptions thereof will be omitted.

The first current collector 420 of the insulator-current collector assembly 402 according to embodiments of the present disclosure includes a first fixing end 440 inserted into and fixed to the insulator 403. For example, the first fixing end 440 may be an end of a first inner plate 426, which is relatively farther from a first central plate 424, among a pair of ends of the first inner plate 426 in the Y-axis direction.

A first current collector plate 423 included in the first current collector 420 includes the first fixing end portion including the first fixing end 440. The first fixing end portion may penetrate into the insulator 403 through one side surface 410 of the insulator 403 and come into surface contact with the insulator 403.

The first fixing end portion includes a plurality of through holes 442. The plurality of through holes 442 may be arranged in a lateral direction of the first current collector plate 423, for example, in a direction parallel to an X-axis.

The second current collector 460 of the insulator-current collector assembly 402 according to embodiments of the present disclosure includes a second fixing end 480 inserted into and fixed to the insulator 403. For example, the second fixing end 480 may be an end of a second inner plate 466, which is relatively farther from a second central plate 464, among a pair of ends of the second inner plate 466 in the Y-axis direction.

A second current collector plate 463 included in the second current collector 460 includes the second fixing end portion including the second fixing end 480. The second fixing end portion may penetrate into the insulator 403 through the other side surface 413 of the insulator 403 and come into surface contact with the insulator 403.

The second fixing end portion includes a plurality of through holes 482. The plurality of through holes 482 may be arranged in a lateral direction of the second current collector plate 463, for example, in a direction parallel to the X-axis.

Inside the insulator 403, an electrically insulating material may be filled in the plurality of through holes 442 of the first fixing end portion and the plurality of through holes 482 of the second fixing end portion. As a result, the first fixing end portion and the second fixing end portion are in surface contact with the insulator 403 over a larger area inside the insulator 403. Accordingly, a heat dissipation effect of the insulator-current collector assembly 402 according to embodiments of the present disclosure may be further improved compared to the heat dissipation effect of the insulator-current collector assembly 400 according to embodiments.

Meanwhile, in the insulator-current collector assembly 402 according to embodiments of the present disclosure, the first fixing end portion and the second fixing end portion may include grooves instead of the through holes 442 and 482 illustrated in FIGS. 9 and 10.

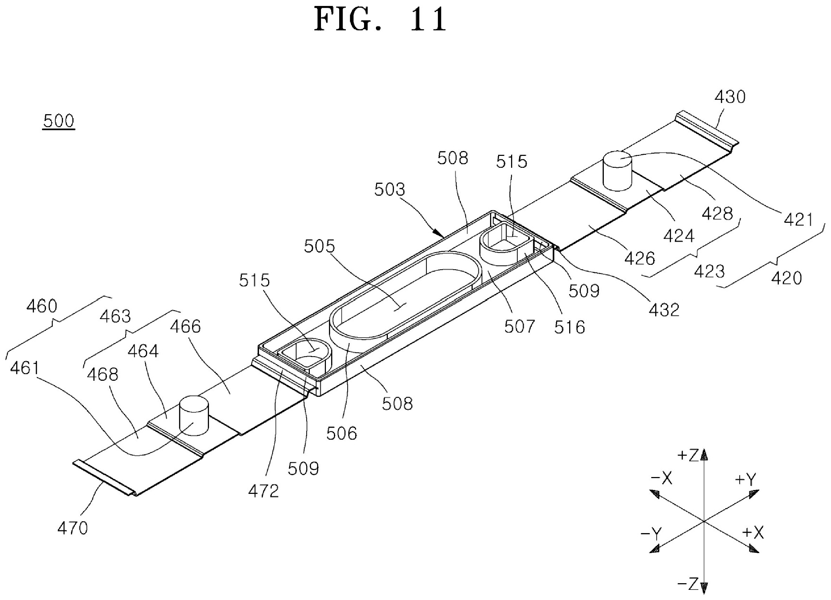

FIG. 11 is a perspective view of an insulator-current collector assembly according to embodiments of the present disclosure.

Referring to FIGS. 3, 5, and 11, an insulator-current collector assembly 500 according to embodiments of the present disclosure may be included in a secondary battery 2 in place of the insulator-current collector assembly 400 according to embodiments of the present disclosure. Similar to the insulator-current collector assembly 400 according to embodiments of the present disclosure, the insulator-current collector assembly 500 according to embodiments of the present disclosure includes a first current collector 420, a second current collector 460, and an insulator 503.

The first current collector 420 and the second current collector 460 included in the insulator-current collector assembly 500 according to embodiments of the present disclosure have the same configuration as the first current collector 420 and the second current collector 460 included in the insulator-current collector assembly 400 according to embodiments of the present disclosure, and thus redundant descriptions thereof will be omitted.

The insulator 503 may include a bottom plate portion 507 extending in the second direction perpendicular to the first direction, a pair of first side wall portions 508 protruding in the first direction from both end portions of the bottom plate portion 507 in the lateral direction, and a pair of second side wall portions 509 protruding in the first direction from both end portions of the bottom plate portion 507 in the longitudinal direction.

A first fixing end 432 of the first current collector 420 may be fixed to one of the pair of second side wall portions 509, and a second fixing end 472 of the second current collector 460 may be fixed to the other of the pair of second side wall portions 509.

The insulator 503 may include a gas discharge through-hole 505 and an electrolyte through-hole 515.

The gas discharge through-hole 505 may be formed in the bottom plate portion 507 so as to pass through the bottom plate portion 507 in the first direction. The insulator 503 may include a first through-hole wall portion 506 protruding in the first direction from an inner circumferential edge of the gas discharge through-hole 505 formed in the bottom plate portion 507.

When substances such as gases, flames, or smoke generated inside a case 100 flow into the gas discharge through-hole 505, the gases, flames, or smoke may be guided to the vent hole 182 along the first through-hole wall portion 506 without being dispersed.

The electrolyte through-hole 515 is open so as to overlap the electrolyte injection hole 180 and is located spaced apart from the gas discharge through-hole 505. The electrolyte through-holes 515 may be provided in pairs symmetrically on the left and right with respect to the gas discharge through-hole 505 in the insulator 503.

In this case, since the insulator-current collector assembly 500 is symmetrical in shape with respect to the gas discharge through-hole 505, the risk of defects in the secondary battery 2 due to incorrect installation of the insulator-current collector assembly 500 inside the case 100 may be reduced.

The electrolyte through-hole 515 may be formed in the bottom plate portion 507 to pass through the bottom plate portion 507 in the first direction. The insulator 503 may include a second through-hole wall portion 516 that protrudes in the first direction from an inner peripheral edge of the electrolyte through-hole 515 formed in the bottom plate portion 507.

An electrolyte introduced into the case 100 through the electrolyte injection hole 180 may pass through the insulator 503 along the second through-hole wall portion 516 without being blocked by the insulator 503 and fall toward the electrode assembly 200. Accordingly, the electrolyte may not accumulate on the bottom plate portion 507.

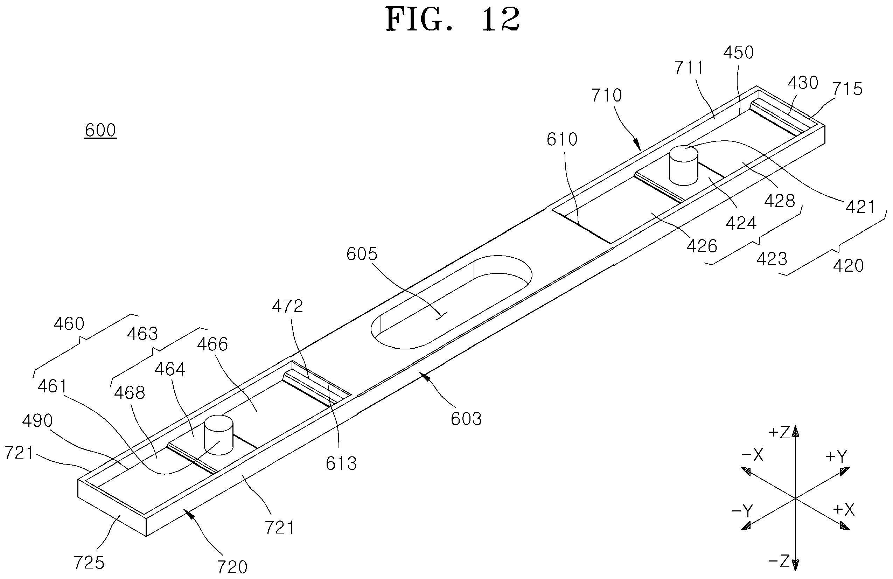

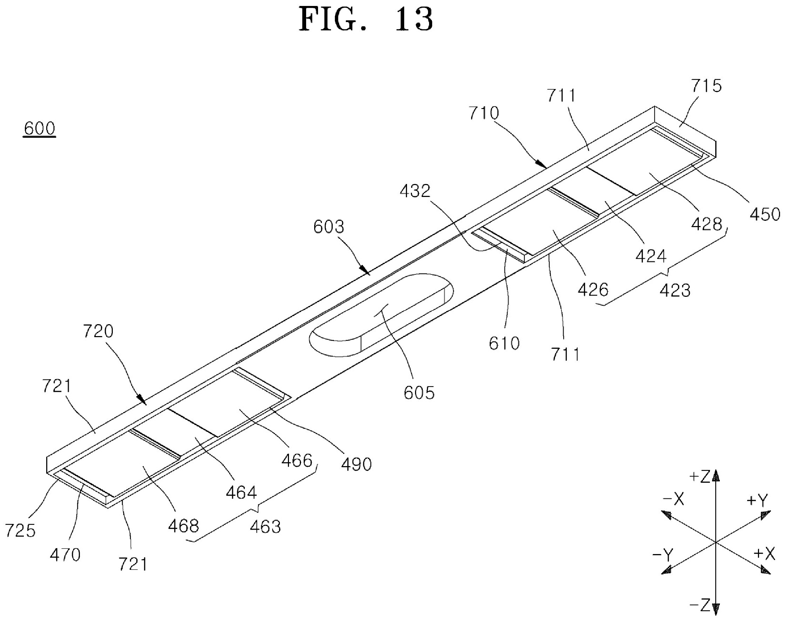

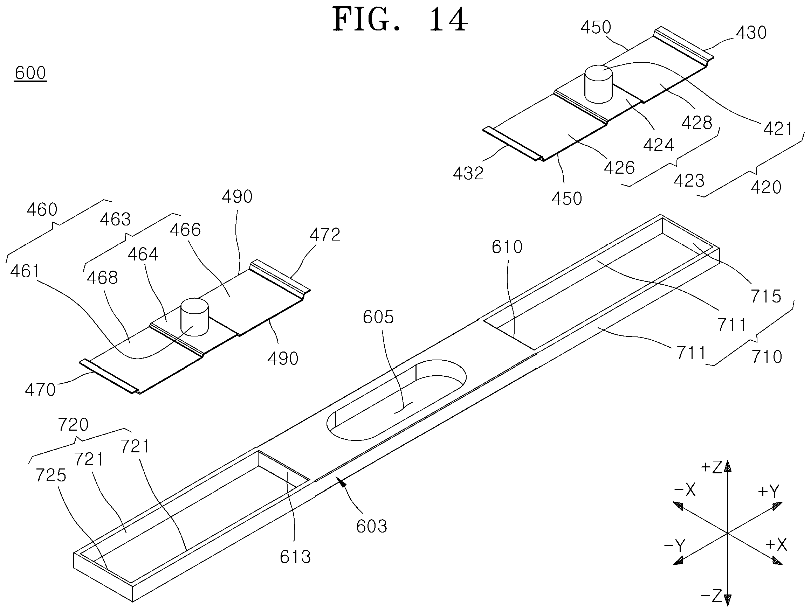

FIG. 12 is a perspective view of an insulator-current collector assembly according to embodiments of the present disclosure, viewed from above, FIG. 13 is a perspective view of the insulator-current collector assembly according to embodiments of the present disclosure, viewed from below, and FIG. 14 is an exploded perspective view of the insulator-current collector assembly according to embodiments of the present disclosure.

Referring to FIGS. 3, 5, and 12 to 14, an insulator-current collector assembly 600 according to embodiments of the present disclosure may be included in a secondary battery 2 in place of the insulator-current collector assembly 400 according to embodiments of the present disclosure. Similar to the insulator-current collector assembly 400 according to embodiments of the present disclosure, the insulator-current collector assembly 600 according to embodiments of the present disclosure includes a first current collector 420, a second current collector 460, and an insulator 603.

The first current collector 420 and the second current collector 460 included in the insulator-current collector assembly 600 according to embodiments of the present disclosure have the same configuration as the first current collector 420 and the second current collector 460 included in the insulator-current collector assembly 400 according to embodiments of the present disclosure, and thus redundant descriptions thereof will be omitted.

The insulator 603 has one side coupled to the first current collector 420 and the other side coupled to the second current collector 460. The insulator 603 may be located between the first current collector 420 and the second current collector 460, which are spaced apart from each other in the Y-axis direction.

The insulator 603 includes an electrically insulating material. The insulator 603 may be formed of an electrically insulating material.

The insulator 603 includes a gas discharge through-hole 605 that is open so as to overlap the vent hole 182. The gas discharge through-hole 605 may be formed in the insulator 603 so as to pass through the insulator 603 in the first direction. The vent hole 182 and the gas discharge through-hole 605 may be arranged along a straight line parallel to the first direction.

Accordingly, when an internal pressure of a case 100 exceeds a reference pressure and the cell vent 185 ruptures, gases, flames, smoke, and the like may be smoothly discharged to the outside of the case 100 through the gas discharge through-hole 605 and the vent hole 182 without being blocked by the insulator 603.

A first fixing end 432 of the first current collector 420 may be inserted and fixed into the insulator 603 through one side surface 610 of the insulator 603. A second fixing end 472 of the second current collector 460 may be inserted and fixed into the insulator 603 through the other side surface 613 of the insulator 603.

The insulator-current collector assembly 600 may include a first current collector contact portion 710 and a second current collector contact portion 720. The first current collector contact portion 710 comes into contact with an outer peripheral portion of the first current collector 420 so as to suppress shaking of the first current collector 420. The second current collector contact portion 720 comes into contact with an outer peripheral portion of the second current collector 460 so as to suppress shaking of the second current collector 460.

The first current collector contact portion 710 and the second current collector contact portion 720 may be connected to the insulator 603. The first current collector contact portion 710 and the second current collector contact portion 720 may include a material identical to the electrically insulating material of the insulator 603.

The first current collector contact portion 710 may include a pair of first current collector plate longitudinal extensions 711 and one first current collector plate lateral extension 715.

The pair of first current collector plate longitudinal extensions 711 may extend in a longitudinal direction of a first current collector plate 423 so as to come into contact with both side edges 450 of the first current collector plate 423 in a lateral direction. The pair of first current collector plate longitudinal extensions 711 may extend parallel to and spaced apart from each other.

The first current collector plate lateral extension 715 may extend in the lateral direction of the first current collector plate 423 so as to come into contact with an end 430 of the first current collector plate 423 opposite to the first fixing end 432 in the longitudinal direction of the first current collector plate 423.

Both end portions of the first current collector plate lateral extension 715 may be connected to the pair of first current collector plate longitudinal extensions 711. Specifically, an end portion of the first current collector plate lateral extension 715 may be connected to an end portion of the first current collector plate longitudinal extension 711, which is farther from the insulator 603 among opposite end portions of the first current collector plate longitudinal extensions 711 in the longitudinal direction.

The second current collector contact portion 720 may include a pair of second current collector plate longitudinal extensions 721 and one second current collector plate lateral extension 725.

The pair of second current collector plate longitudinal extensions 721 may extend in a longitudinal direction of a second current collector plate 463 so as to come into contact with both side edges 490 of the second current collector plate 463 in a lateral direction. The pair of second current collector plate longitudinal extensions 721 may extend parallel to and spaced apart from each other.

The second current collector plate lateral extension 725 may extend in the lateral direction of the second current collector plate 463 so as to come into contact with an end 470 of the second current collector plate 463 opposite to the second fixing end 472 in the longitudinal direction of the second current collector plate 463.

Both end portions of the second current collector plate lateral extension 725 may be connected to the pair of second current collector plate longitudinal extensions 721. Specifically, an end portion of the second current collector plate lateral extension 725 may be connected to an end portion of the second current collector plate longitudinal extension 721, which is farther from the insulator 603 among opposite end portions of the second current collector plate longitudinal extension 721 in the longitudinal direction.

The insulator-current collector assembly 600 may be manufactured by a so-called insert molding method in which the first current collector 420 and the second current collector 460 are inserted and fixed inside a mold, and a molten synthetic resin is injected into the mold and cured.

In this case, the edges 450 of the first current collector plate 423 in the width direction may be inserted into the first current collector plate longitudinal extensions 711, and the end 430 of the first current collector plate 423 opposite to the first fixing end 432 may be inserted into the first current collector plate lateral extension 715.

Similarly, the edges 490 of the second current collector plate 463 in the lateral direction may be inserted into the second current collector plate longitudinal extensions 721, and the end 470 of the second current collector plate 463 opposite to the second fixing end 472 may be inserted into the second current collector plate lateral extension 725.

The first current collector plate 423 is in contact with and supported by the first current collector contact portion 710, and the second current collector plate 463 is in contact with and supported by the second current collector contact portion 720, so that irregular movement and shaking of the first current collector 420 and the second current collector 460 are further suppressed, and heat dissipation of the first current collector 420 and the second current collector 460 may be further promoted.

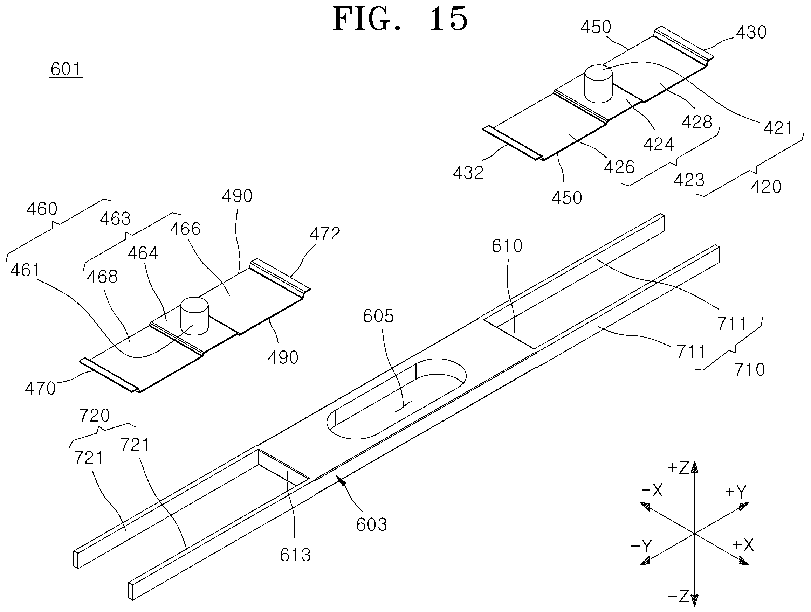

FIG. 15 is an exploded perspective view of an insulator-current collector assembly according to embodiments of the present disclosure.

Referring to FIGS. 2, 3, 5, and 12 to 15, an insulator-current collector assembly 601 according to embodiments of the present disclosure may be included in a secondary battery 2 in place of the insulator-current collector assembly 400 according to embodiments of the present disclosure.

Similar to the insulator-current collector assembly 600 according to embodiments of the present disclosure, the insulator-current collector assembly 601 according to embodiments of the present disclosure includes a first current collector 420, a second current collector 460, an insulator 603, a first current collector contact portion 710, and a second current collector contact portion 720.

The first current collector 420, the second current collector 460, and the insulator 603 included in the insulator-current collector assembly 601 according to embodiments of the present disclosure are identical to the first current collector 420, the second current collector 460, and the insulator 603 included in the insulator-current collector assembly 600 according to embodiments of the present disclosure, and thus redundant descriptions thereof will be omitted.

The first current collector contact portion 710 comes into contact with an outer peripheral portion of the first current collector 420 so as to suppress shaking of the first current collector 420. The second current collector contact portion 720 comes into contact with an outer peripheral portion of the second current collector 460 so as to suppress shaking of the second current collector 460.

The first current collector contact portion 710 and the second current collector contact portion 720 may be connected to the insulator 603. The first current collector contact portion 710 and the second current collector contact portion 720 may include a material identical to an electrically insulating material of the insulator 603.

The first current collector contact portion 710 includes a pair of first current collector plate longitudinal extensions 711. The pair of first current collector plate longitudinal extensions 711 may extend in a longitudinal direction of a first current collector plate 423 so as to come into contact with both side edges 450 of the first current collector plate 423 in a lateral direction. The pair of first current collector plate longitudinal extensions 711 may extend parallel to and spaced apart from each other.

An end 430 of the first current collector plate 423 opposite to a first fixing end 432 of the first current collector plate 423 in the longitudinal direction may be exposed without being brought into contact with and supported by the first current collector contact portion 710.

The second current collector contact portion 720 may include a pair of second current collector plate longitudinal extensions 721. The pair of second current collector plate longitudinal extensions 721 may extend in a longitudinal direction of a second current collector plate 463 so as to come into contact with both side edges 490 of the second current collector plate 463 in a lateral direction. The pair of second current collector plate longitudinal extensions 721 may extend parallel to and spaced apart from each other.

An end 470 of the second current collector plate 463 opposite to a second fixing end 472 of the second current collector plate 463 in the longitudinal direction may be exposed without being brought into contact with and supported by the second current collector contact portion 720.

The insulator-current collector assembly 601 may be manufactured by a so-called insert molding method in which the first current collector 420 and the second current collector 460 are inserted and fixed inside a mold, and a molten synthetic resin is injected into the mold and cured.

In this case, the edges 450 of the first current collector plate 423 in the lateral direction may be inserted into the first current collector plate longitudinal extensions 711, and the edges 490 of the second current collector plate 463 in the lateral direction may be inserted into the second current collector plate longitudinal extensions 721.

Similar to the insulator-current collector assembly 600 according to embodiments of the present disclosure, in the insulator-current collector assembly 601 according to embodiments of the present disclosure, the first current collector plate 423 may be brought into contact with and supported by the first current collector contact portion 710, and the second current collector plate 463 may be brought into contact with and supported by the second current collector contact portion 720, so that irregular movement and shaking of the first current collector 420 and the second current collector 460 may be further suppressed, and heat dissipation of the first current collector 420 and the second current collector 460 may be further promoted.

According to the present disclosure, a pair of current collectors are coupled to each other via an insulator to form an insulator-current collector assembly. Accordingly, the degree of freedom of movement of the pair of current collectors inside a case can be reduced, thereby lowering a defect rate of a secondary battery and improving performance of the secondary battery and a battery module including the same.

According to the present disclosure, end portions of a pair of current collectors are connected to an insulator having excellent thermal conductivity, and thus heat dissipation of the current collectors during a manufacturing process of a secondary battery and during charging and discharging of the secondary battery can be facilitated. Accordingly, thermal deformation of the current collectors and overheating and thermal runaway of the secondary battery caused thereby can be suppressed.

However, aspects and features of the present disclosure are not limited to those described herein and other aspects and features not mentioned will be clearly understood by those skilled in the art from the detailed description given herein.

Although the present disclosure has been described with reference to some embodiments and drawings illustrating aspects thereof, the present disclosure is not limited thereto. Various modifications and variations can be made by a person skilled in the art to which the present disclosure belongs within the scope of the technical spirit of the disclosure and the claims and equivalents thereto.

## Claims

1. A secondary battery comprising:
a case (100);
a first terminal (310) and a second terminal (320) that protrude outwardly from the case (100);
an electrode assembly (200) disposed inside the case (100) and including a first electrode (210) and a second electrode (220);
a first tab member (240) and a second tab member (250) extending from the first electrode (210) and the second electrode (220), respectively; and
an insulator-current collector assembly (400-402, 500, 600, 601) disposed inside the case (100) and including a first current collector (420) electrically coupled to the first tab member (240) and the first terminal (310), a second current collector (460) spaced apart from the first current collector (420) and electrically coupled to the second tab member (250) and the second terminal (320), and an insulator (403, 503, 603) including an electrically insulating material and having one side coupled to the first current collector (420) and the other side coupled to the second current collector (460).

2. The secondary battery as claimed in claim 1, wherein:
the first current collector (420) includes a first fixing end (432, 435, 440) inserted into and fixed to the insulator (403, 503, 603), and
the second current collector (460) includes a second fixing end (472, 480) inserted into and fixed to the insulator (403, 503, 603).

3. The secondary battery as claimed in claim 2, wherein:
an end (430, 470) of the first current collector opposite to the first fixing end (432, 435, 440) in a longitudinal direction, and
an end (430, 470) of the second current collector opposite to the second fixing end (472, 480) in the longitudinal direction is each a free end.

4. The secondary battery as claimed in any one of claims 1 to 3, wherein the electrically insulating material is a thermally conductive synthetic resin or a thermally conductive ceramic.

5. The secondary battery as claimed in any one of claims 1 to 4, wherein the electrically insulating material is a thermally conductive ceramic.

6. The secondary battery as claimed in any one of the preceding claims when combined with claim 2, wherein:
the first current collector (420) includes a first fixing end portion including the first fixing
end (432, 435, 440), the second current collector (460) includes a second fixing end (472, 480) portion including the second fixing end (472, 480), and
each of the first fixing end portion and the second fixing end (472, 480) portion penetrates into the insulator (403, 503, 603) and comes into surface contact with the insulator (403, 503, 603).

7. The secondary battery as claimed in claim 6, wherein each of the first fixing end portion and the second fixing end (472, 480) portion extends along a curved path inside the insulator (403, 503, 603).

8. The secondary battery as claimed in any one of the preceding claims 1 to 7, wherein:
the case (100) includes a vent hole (182) opened to allow a gas to flow between an inside and an outside of the case (100), and a cell vent (185) coupled to the case (100) to close the vent hole (182) and configured to rupture when an internal pressure of the case (100) is greater than or equal to a reference pressure, and
the insulator (403, 503, 603) includes a gas discharge through-hole (405, 505, 605) opened to overlap the vent hole (182) so as not to block the vent hole (182).

9. The secondary battery as claimed in claim 8, wherein:
the case (100) includes an electrolyte injection hole (180) opened to inject an electrolyte into the case (100), and
the insulator (403, 503, 603) includes an electrolyte through-hole (515) opened to overlap the electrolyte injection hole (180) and located spaced apart from the gas discharge through-hole (405, 505, 605) so that the electrolyte introduced into the case (100) through the electrolyte injection hole (180) is not blocked by the insulator (403, 503, 603).

10. The secondary battery as claimed in any one of the preceding claims 1 to 9, wherein:
the insulator-current collector assembly (400-402, 500, 600, 601) includes a first current collector (420) contact portion that comes into contact with an outer peripheral portion of the first current collector (420) so as to suppress shaking of the first current collector (420), and a second current collector (460) contact portion that comes into contact with an outer peripheral portion of the second current collector (460) so as to suppress shaking of the second current collector (460), and
the first current collector (420) contact portion and the second current collector (460) contact portion are connected to the insulator (403, 503, 603).

11. The secondary battery as claimed in claim 10, wherein:
the first current collector (420) includes a first current collector plate (423) electrically coupled to the first tab member (240), and a first boss protruding from the first current collector plate (423) toward the first terminal (310) and electrically coupled to the first terminal (310), and
the second current collector (460) includes a second current collector plate (463) electrically coupled to the second tab member (250), and a second boss protruding from the second current collector plate (463) toward the second terminal (320) and electrically coupled to the second terminal (320).

12. The secondary battery as claimed in claim 11, wherein:
the first current collector (420) contact portion includes a pair of first current collector plate (423) longitudinal extensions substantially extending in a longitudinal direction of the first current collector plate (423) so as to be in contact with both side edges (450, 490) of the first current collector plate (423) in a lateral direction, respectively, and
the second current collector (460) contact portion includes a pair of second current collector plate (463) longitudinal extensions substantially extending in a longitudinal direction of the second current collector plate (463) so as to be in contact with both side edges (450, 490) of the second current collector plate (463) in a lateral direction, respectively.

13. The secondary battery as claimed in claim 12, wherein:
the first current collector plate (423) includes a first fixing end (432, 435, 440) inserted into and fixed to the insulator (403, 503, 603),
the second current collector plate (463) includes a second fixing end (472, 480) inserted into and fixed to the insulator (403, 503, 603),
the first current collector (420) contact portion includes a first current collector plate (423) lateral extension substantially extending in the lateral direction of the first current collector plate (423) so as to be in contact with an end (430, 470) of the first current collector plate (423) opposite to the first fixing end (432, 435, 440) in the longitudinal direction, and
the second current collector (460) contact portion includes a second current collector plate (463) lateral extension substantially extending in the lateral direction of the second current collector plate (463) so as to be in contact with an end (430, 470) of the second current collector plate (463) opposite to the second fixing end (472, 480) in the longitudinal direction.

14. The secondary battery as claimed in claim 13, wherein:
both end portions of the first current collector plate (423) lateral extension are connected to the pair of first current collector plate (423) longitudinal extensions, respectively, and
both end portions of the second current collector plate (463) lateral extension are connected to the pair of second current collector plate (463) longitudinal extensions, respectively.

15. A battery module comprising:
a housing (10); and
a plurality of secondary batteries disposed inside the housing (10),
wherein each of the secondary batteries includes:
a case (100);
a first terminal (310) and a second terminal (320) that protrude outwardly from the case (100);
an electrode assembly (200) disposed inside the case (100) and including a first electrode (210) and a second electrode (220);
a first tab member (240) and a second tab member (250) extending from the first electrode (210) and the second electrode (220), respectively; and
an insulator-current collector assembly (400-402, 500, 600, 601) disposed inside the case (100) and including a first current collector (420) electrically coupled to the first tab member (240) and the first terminal (310), a second current collector (460) spaced apart from the first current collector (420) and electrically coupled to the second tab member (250) and the second terminal (320), and an insulator (403, 503, 603) including an electrically insulating material and having one side coupled to the first current collector (420) and the other side coupled to the second current collector (460).
